(19) **Europäisches Patentamt**
**European Patent Office**
**Office européen des brevets**

(11) **EP 4 641 519 A1**

(12) **EUROPEAN PATENT APPLICATION**

(43) Date of publication:
**29.10.2025 Bulletin 2025/44**

(21) Application number: **24171545.7**

(22) Date of filing: **22.04.2024**

(51) International Patent Classification (IPC):
**G06V 10/77** (2022.01)    **G06V 10/82** (2022.01)
**G06V 20/58** (2022.01)    **G06V 10/44** (2022.01)

(52) Cooperative Patent Classification (CPC):
**G06V 20/586; G06V 10/44; G06V 10/77;**
**G06V 10/82**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **AUMOVIO Autonomous Mobility**
**Germany GmbH**
**85057 Ingolstadt (DE)**

(72) Inventors:
• **Ivan, David**
  **1092 Budapest (HU)**
• **Mattyus, Gellert Sandor**
  **1092 Budapest (HU)**

(74) Representative: **Aumovio Corporation**
**Continental Automotive**
**Technologies GmbH**
**Putzbrunner Straße 69**
**81739 München (DE)**

(54) **IMAGE-BASED PARKING SLOT DETERMINATION**

(57)    The invention refers to a computer-implemented method for determining a position or pose ($p_{ps}$) of a parking slot (PS) in a reference coordinate system based on image data, the method comprising the steps of:
- receiving an image (I(PS) showing at least one parking slot (PS);
- determining four edges (p) of the parking slot (PS); and
- determining the position or pose ($p_{ps}$) of the parking slot (PS) in the reference coordinate system based on the four edges (p).

According to the present invention determining the position or pose comprises:
- assuming a geometry (g(PS)) of the parking slot (PS);
- building at reconstruction matrix (A) based on the assumed geometry ( g(PS)) and the determined edges; and
- determining the position or pose ($p_{ps}$) of the parking slot (PS) in the reference coordinate system by applying a singular value decomposition (SVD) of the reconstruction matrix (A).

Fig. 1

**Description**

The present invention is concerned with a computer-implemented method for determining a position or pose of a parking slot in a reference coordinate system based on image data, with a preferred use of the determined position or pose for a parking function of an advanced driver assistance system, or for a scene interpretation module, by a computer-program, computer-readable (storage) medium and by an advanced driver assistance system comprising at least one camera, which is embodied to carry out the method according to the present invention.

Advanced driver assistance systems (ADAS) for vehicles are based on a processing of various data sensed by various ADAS sensors, such as radar-, LiDAR- and ultrasonic sensors as well as cameras. By means of the ADAS sensors information relating to an environment of the vehicle can be obtained which in turn is used to realize various ADAS functions. ADAS functions on the one hand may include an assistance for the driver while control of the vehicle remains with the driver. On the other hand, depending on the level of automation, a full autonomously driving vehicle may be realized. Known ADAS functions for instance are various methods for detecting and/or classifying objects and/or obstacles in the vicinity of the vehicle, methods for lane detection and/or lane departure, methods for rain detection or also various parking assistance functions.

In case of parking assistance functions, various methods to support parking of a vehicle are known, e. g. support to search for a parking slot or to assist with a parking process, but also for autonomously performing the parking process. The higher the level or automation, the more reliable and detailed information about the precise position of the parking slot is needed.

It is e. g. known to perform a backpropagation of 2D image points onto an assumed ground plane by computing an intersection of a plane and a line in 3D. The resulting points are used as the edges of the parking slots. Even though such approach is rather straightforward to implement it may be error prone. For instance certain constraints such as the assumption of parallel border lines of the parking slot cannot be guaranteed.

In addition, a subsequent fitting of a parking slot geometry onto the determined points by minimizing a cost function, e. g. a squared distance of fitted points and the computed points, is carried out as well. Such optimization may be performed by means of a least square method and by assuming Gaussian added noise. However, the fitting process minimizes an error on the plane, but not for the source of the noise, which is the image itself. The backpropagation furthermore magnifies errors in a non-linear way. Due to the non-linearity, the noise is not Gaussian which makes the optimization process rather complex. Accordingly, this approach is either accompanied by lower accuracy or higher computational demand.

Alternatively, it is possible to transform the image into a birds eye view by a flat world assumption, i.e. assuming a vehicle environment as a known plane, and provide the bird eye view images to a neural network. However, this necessitates an accurate formulation of one single reference plane. In reality, however, parking slots could be located at different planes. That way, also this approach can cause significant error and/or require increased computational demand.

Finally, it is as well known to use a 3D bird eye view representation of the image data directly as input for a neural network embodied to detect the parking slot based on the input data. Such procedure was e. g. described in "NVAutoNet: Fast and Accurate 360° 3D Visual Perception For Self Driving" by T. Pham et al., available on arXiv:2303.12976. A suitable network for this task, however, has a rather complex architecture accompanied by higher computational demand, and 3D ground truth data would be needed for its training.

Another approach was described by X. Zhou et al. in "Objects as Points", published on arXiv: 1904.07850, suggested a detection of objects based on single points, i.e. the center point of the object's bounding box. Subsequently, further object properties are regressed, e. g. size, 3D location, orientation and pose.

A review of the use of computer vision for parking was provided by C. Eising et al. in the article "Computer Vision in Automated Parking Systems: Design, Implementation and Challenges", available on arXiv:2104.12537.

Based thereon it is an object of the present invention to improve the determination of the pose or position of parking slots based on image data.

This object is achieved by means of the method according to claim 1, the use of the determined pose or position for an advanced driver assistance system according to claim 8, as well as by means of the, the computer program according to claim 9, the computer-readable medium according to claim 10, and the advanced driver assistance system according to claim 11.

With respect to the method, the problem underlying the present invention is solved by a computer-implemented method for determining a position or pose of a parking slot in a reference coordinate system based on image data, the method comprising the steps of:

- receiving an image showing at least one parking slot;
- determining four edges of the parking slot; and
- determining the position or pose of the parking slot in the reference coordinate system based on the four edges.

According to the present invention determining the position or pose comprises:

- assuming a geometry of the parking slot;
- building at reconstruction matrix based on the assumed geometry and the determined edges; and
- determining the position or pose of the parking slot in the reference coordinate system by applying a singular value decomposition of the reconstruction matrix.

The method according to the present invention provides an alternative to determine a position or pose of a parking slot in a reference coordinate system, e. g. a world coordinate system. The invention specifically addresses how a position or pose in three dimensions may be estimated in an efficient manner based on noisy 2D camera images by leveraging certain constraints with respect to the parking slot, e. g. some geometrical considerations referring to the parking slot. In addition, the provided solution features a high accuracy with respect to the parking slot reconstruction and also has the advantage of high computational efficiency.

The pose thereby refers to a combination of position and orientation of the parking slot.

It is of advantage, if the parking slot and/or the four edges of the parking slot are determined by using a neural network embodied to detect the parking slot and/or edges of a parking slot based on image input data. The neural network may be configured in the form of an object detector and may be trained using a data set of images showing labeled parking slots or labeled features characterizing a parking slot, e. g. its edges.

According to a preferred embodiment of the method, the geometry of the parking slot is assumed to be a rectangle or parallelogram. This means, that opposing border lines of the parking slot are assumed to be parallel. This simplifies the computational effort of estimating or determining the position or pose of the parking slot.

In this regard, it is further of advantage, if the geometry of the parking slot in the form of a parallelogram or rectangle is described by equations, especially homogeneous equations, referring to two pairs of parallel lines.

Another preferred embodiment comprises that a ground plane in which the parking slot lies is determined. The ground plane may especially be determined based on a position and/or orientation of the vehicle and/or the camera, i. e. based on known coordinates of the vehicle and/or camera, preferably in the reference coordinate system.

The ground plane may further advantageously be characterized by a normal vector. Then, a height of the ground plane may be estimated based on the normal vector and be used to determine a height of the position and/or pose of the parking slot in the reference coordinate system. This embodiment further has the advantage, that, if a neural network is utilized to identify the parking slot in an image, the network may be trained based on 2D labels, whereas no 3D labeling of used training data is necessary. This simplifies the set-up of the step of identification of the parking slot in the images significantly.

In this regard, it is of advantage, if the plane is transformed into a horizontal plane. A majority of parking slots is positioned in an essentially horizontal plane.

Finally, in another preferred embodiment a non-linear refinement is carried out.

The objective problem underlying the present invention is further solved by using the position or pose of the parking slot determined by the method according to the present invention and according to any of the embodiments described for a parking function of an advanced driver assistance system, or for a scene interpretation module.

The objective problem is as well solved by a computer program comprising instructions, which, when the program is executed by a computer, cause the computer to carry out the method according to the present invention and by a computer-readable (storage) medium comprising instructions executable by at least one processor to perform the method according to the present invention or on which the computer program according to the present invention is stored.

Finally, the objective problem is also solved by an advanced driver assistance system comprising at least one camera, wherein the advanced driver assistance system is embodied to carry out the method according to any embodiments of the method according to the present invention.

The invention and its preferred embodiments will be further described based on the subsequent figures, wherein

Fig. 1 shows a block diagram to illustrate the method according to the present invention; and

Fig. 2 shows a comparison of a state of the art method to locate a parking slot in an image and the method according to the present invention.

In the figures the same reference symbols are used for the same elements.

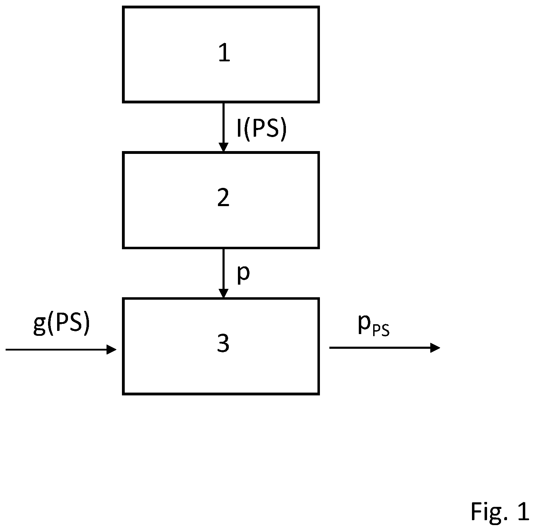

In Fig. 1 a block diagram illustrating the method according to the present invention is shown. In an image I(PS) received in a first method step 1 showing a parking slot PS, a second method step 2 includes determining four edges p of the parking slot PS. The determination may include an identification of the edges p in the image I(PS) which in turn e. g. may be performed by any suitable detection algorithm, preferably by using a neural network embodied to detect a parking slot PS in image data I(PS). The determination of the edges p of the parking slot may further include their transformation into a reference coordinate system. For instance, in an exemplary embodiment as indicated in Fig. 1, 3D rays may be calculated from the edges p identified in the image I(PS), e. g. by using the camera calibration. In addition, a ground plane for the parking slot PS, here in the form of a horizontal plane, may be assumed. Then, both the rays and the ground plane may be transformed to a canonical position in which the ground plane has a normal vector n=[0;1;0] meaning that it is horizontal in the camera frame. Accordingly, in this case the camera coordinate system serves as the reference coordinate system.

Subsequently, in a third method step 3, based on an assumed geometry g(PS) of the parking slot PS, and based on its determined edges p, the position or pose $p_{ps}$ of the parking slot PS may be determined. The determination of the pose $p_{ps}$ of the parking slot PS includes to build a reconstruction matrix A based on the edges p and the assumed geometry g(PS). The reconstruction matrix A represents a linear set of equations which is solved by applying a singular value decomposition SVD and optionally a non-linear refinement. Finally, the parameters determined by solving the set of linear equations may serve to calculate the pose or position $p_{ps}$ of the parking slot PS.

Several preferred embodiments of method step 3 will be explained in more detailed in the following:

In a 2D representation a parking slot PS may be represented by an assumed geometry g(PS) of a parallelogram. Such constrain accurately represents the most important and frequent parking cases, such as parallel parking, perpendicular parking and tilted parking. The assumption of a parallelogram for the parking slot geometry g(PS) allows a precise alignment of a vehicle relative to the parking slot PS determined.

A parallelogram may be described by a set of two parallel pairs of lines and by using the following homogenous equations:

$$n_x^{(i)}x + n_y^{(i)}y + d_1^{(i)} = 0$$

$$n_x^{(i)}x + n_y^{(i)}y + d_2^{(i)} = 0; \qquad i = 1,2$$

where i refers to an index of each pair of parallel lines. That way, there are six parameters needed to describe the parallelogram. The parameters may be estimated based on the determined edges p of the parking slot PS.

**Parallelogram Fitting in 2D**

Each of the four edges of the parking slot PS defines one equation of the parallelogram. Because the two pairs of parallel lines of the parallelogram do not share parameters, the problem may be solved by two independent homogeneous least square problems Aq=0, where A is the corresponding reconstruction matrix with

$$A_i = [x_i; y_i; 1; 0]$$

or

$$A_i = [x_i; y_i; 0; 1]$$

depending on to which line of the parallelogram a point belongs; and with the variables

$$q^{(i)} = \begin{pmatrix} n_x^{(i)} \\ n_y^{(i)} \\ d_1^{(i)} \\ d_2^{(i)} \end{pmatrix}$$

Because the assumed geometry of the parallelogram is described by homogenous equations, the variables may be rescaled, so that:

$$\left\| \left[ n_x^{(i)}; n_y^{(i)} \right] \right\|_2^2 = 1$$

**Parallelogram Fitting in 3D**

In order to obtain a 3D representation, it is assumed that the parallelogram lies on a plane in the 3D space. If the orientation of the plane is known, a normal vector of the plane may be constructed and a height of the plain may be estimated.

In case of a horizontal orientation of the parking slot PS, corresponding to [0;0;1] in a vehicle frame or [0;1;0] in a camera frame, a distance from this plane needs to be determined. A non-horizontal plane of the parking slot PS with known normal vector may be transformed to a horizontal plane by rotating the edges of the parking slot PS determined from the image I(PS).

As discussed already above, a line on a certain plane in 2D may be described by

$$n_x x + n_y y + d = 0$$

Line in 2D: $n_{l2} = [n_x; n_y]^T$ Plane in 3D on plane with normal vector $n_g = [0; 1; 0]^T$: $n_l = [n_x; 0; n_z]^T$

The line in 3D is an intersection of two planes with direction:

$$v_l = n_g \times n_l = \begin{bmatrix} 0 & 0 & 1 \\ 0 & 0 & 0 \\ -1 & 0 & 0 \end{bmatrix} n_l = \begin{bmatrix} n_z \\ 0 \\ -n_x \end{bmatrix}$$

which can be parameterized as:

$$x(t) = p_0 + v_l t; \ t \in [-\infty, \infty]$$

with $p_0$ being any point on the line.

A point $p_0 = [x_0; y_0; z_0]^T$ needs to satisfy that is lies on both planes:

$$n_g^T p_0 = h \Rightarrow 0 x_0 + y_0 + 0 z_0 + (-h) = 0 \Rightarrow y_0 = h$$

$$n_l^T p_0 + d \Rightarrow n_x x_0 + 0 y_0 + (-n_z) z_0 = -d$$

by taking $z_0 = 0$

$$x_0 = -\frac{d}{n_x}$$

and

$$p_0 = \begin{bmatrix} -\dfrac{d}{n_x} \\ h \\ 0 \end{bmatrix}$$

This line may as well be represented by a 3D plane passing through a center of the camera which was used to receive the image I(PS):

$$n_c = p_0 \times (p_0 + v_l) = p_0 \times v_l = -v_l \times p_0 = \begin{bmatrix} 0 & -n_x & 0 \\ n_x & 0 & n_z \\ 0 & -n_z & 0 \end{bmatrix} \begin{bmatrix} -\dfrac{d}{n_x} \\ h \\ 0 \end{bmatrix} = \begin{bmatrix} -h n_x \\ -d \\ -h n_z \end{bmatrix}$$

$$\lim_{x \to 0} \frac{x}{x} = 1$$

Note, that since ⠀⠀⠀⠀, this also holds if $n_x = 0$.

$n_c$ is a normal vector of a plane passing through the origin of the coordinate system, which is a homogenous equation. Accordingly, it can be divided by $-h$, $h \neq 0$, resulting in:

$$n_c = \begin{bmatrix} n_x \\ d/h \\ n_z \end{bmatrix}$$

**Distance to the line (plane)**

For any point $p_j$ representing an image pixel laying on the 3D line, the following scalar product needs to be zero:

$$n_c^T \cdot p_j = 0$$

For a point $p_j$ with unit length $\|p_j\|_2 = 1$ an angle $\theta$ between the point and the plane/line is defined by

$$\|n_c\|_2 \cos \theta = n_c^T \cdot p_j$$

Further defining $\theta = \frac{\pi}{2} - \Delta\theta$ and by using the cosine sum formula:

$$\cos(\alpha - \beta) = \cos \alpha \cos \beta + \sin \alpha \sin \beta$$

one obtains:

$$r_j = n_c^T \cdot p_j = \sin(\Delta\theta) \|n_c\|_2$$

where $\Delta\theta = \frac{\pi}{2} - \theta$. Accordingly, the residuals rj measure the sin of the angle between the point and the plane without normalizing for the amplitude of the plane normal. Note, that this is linear, while the normalized residual

$$\hat{r}_j = \sin \Delta\theta = \frac{n_c^T \cdot p_j}{\|n_c\|_2}$$

would be non-linear.

The line may be fitted by building a linear set of equations following:

$$A n_c = 0$$

with the reconstruction matrix A built by stacking the $p_j$ direction vectors corresponding to the line.

**Parallelogram on the 3D plane**

The starting point are again two pairs of parallel lines. For two parallel lines in the 2D plane x-z one obtains:

$$n_x^{(i)} x + n_z^{(i)} z + d_1^{(i)} = 0$$

$$n_x^{(i)} x + n_z^{(i)} z + d_2^{(i)} = 0, \quad i = 1,2$$

After dividing by $h$, $h \neq 0$ and by renaming the variables to $q_1^{(i)}, q_2^{(i)}, q_3^{(i)}, q_4^{(i)}$ one obtains:

$$n_{c1}^{(1)} = \begin{bmatrix} n_x^{(1)} \\ d_1^{(1)}/h \\ n_z^{(1)} \end{bmatrix} = \begin{bmatrix} q_1^{(1)} \\ q_2^{(1)} \\ q_4^{(1)} \end{bmatrix}$$

$$n_{c2}^{(1)} = \begin{bmatrix} n_x^{(1)} \\ d_2^{(1)}/h \\ n_z^{(1)} \end{bmatrix} = \begin{bmatrix} q_1^{(1)} \\ q_3^{(1)} \\ q_4^{(1)} \end{bmatrix}$$

$$n_{c1}^{(2)} = \begin{bmatrix} n_x^{(2)} \\ d_1^{(2)}/h \\ n_z^{(2)} \end{bmatrix}$$

$$n_{c2}^{(2)} = \begin{bmatrix} n_x^{(2)} \\ d_2^{(2)}/h \\ n_z^{(2)} \end{bmatrix}$$

The two pairs of parallel lines can be solved independently, but they both need to be set with the same distance h. From this, the linear set of equations following

$$Aq = 0$$

needs to be solved, where one row of the reconstruction matrix A with $p_j = [x_j;\ y_j;\ z_j]^T$ is given by

$$A_j = \begin{bmatrix} x_j;\ y_j;\ 0;\ z_j \end{bmatrix}$$

or

$$A_j = \begin{bmatrix} x_j;\ 0;\ y_j;\ z_j \end{bmatrix}$$

depending on from which line the point $p_j$ is chosen. This problem is similar to the 2D case. Solving the system of linear equations in 3D requires a comparable amount as a computation of the corresponding problem in 2D.

**Non-linear refinement**

Since a singular value decomposition (SVD) solves with $\|q\| = 1$ and not $\|n_c\| = 1$, additionally a non-linear refinement may be carried out for

$$\hat{r}_j = \sin \Delta\theta = \frac{n_c^T \cdot p_j}{\|n_c\|_2}$$

**Rectanlge fitting**

In another exemplary embodiment the geometry g(PS) of the parking slot PS is assumed to be rectangular. Then,

$$n_x^{(2)} = -n_z^{(1)}$$

and

$$n_z^{(2)} = n_x^{(1)}$$

As a consequence, the same normal vector nl is obtained for the parallel lines:

$$n_x x + n_z z + d_1^{(1)} = 0$$

$$n_x x + n_z z + d_2^{(1)} = 0$$

$$-n_z x + n_x z + d_1^{(2)} = 0$$

$$-n_z x + n_x z + d_2^{(2)} = 0$$

With

$$q = \left[ n_x; d_1^{(1)}; d_2^{(1)}; d_1^{(2)}; d_2^{(2)}; n_z \right]^T$$

Because $n_x$, $n_y$ define a single direction, there are 5 free parameters and the rows of the reconstruction matrix A are

$$A_j = \left[ x_j; y_j; 0; 0; 0; z_j \right]$$

or

$$A_j = \left[ x_j; 0; y_j; 0; 0; z_j \right]$$

or

$$A_j = \left[ z_j; 0; 0; y_j; 0; -x_j \right]$$

or

$$A_j = \left[ z_j; 0; 0; 0; y_j; -x_j \right]$$

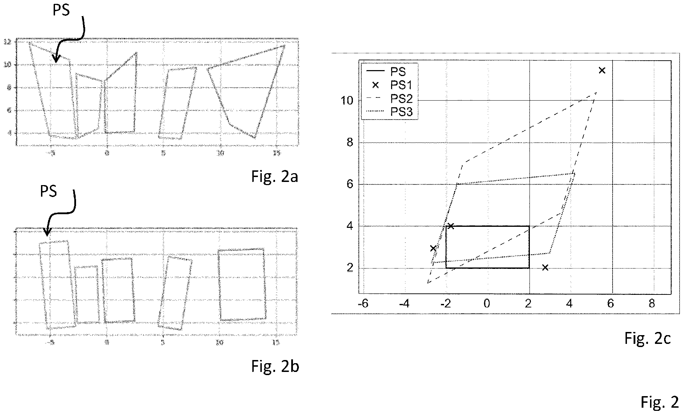

In Fig. 2 compares a back projection of parking slots PS identified in image data on a plane (Fig. 2a) with a determination of the position or pose $p_{ps}$ of the parking slot by using the method suggested by the present invention (Fig. 2b). The state of the art determination of the pose or position $p_{ps}$ of the parking slots PS in Fig. 2a is muss less accurate compared to the results obtained by using the method suggested by the present invention. A similar comparison of different methods to estimate the pose or position $p_{ps}$ of a parking slot PS based on image data I(PS) is shown in Fig. 2c. PS refers to the parking slot PS in the reference coordinate system, or to the reel parking slot PS. PS1 refers to image points referring to the edges p of the parking slot determined by a back projection onto a plane. PS2 refers to the pose of the parking slot PS obtained by a 2D fitting and PS3 a pose of the parking slot PS obtained by performing the method according to the present invention.

**Claims**

1. Computer-implemented method for determining a position or pose ($p_{ps}$) of a parking slot (PS) in a reference coordinate system based on image data, the method comprising the steps of:

   - receiving an image (I(PS)) showing at least one parking slot (PS);
   - determining four edges (p) of the parking slot (PS); and
   - determining the position or pose ($p_{ps}$) of the parking slot (PS) in the reference coordinate system based on the four edges (p);

   wherein determining the position or pose comprises:

   - assuming a geometry (g(PS)) of the parking slot (PS);
   - building at reconstruction matrix (A) based on the assumed geometry ( g(PS)) and the determined edges; and
   - determining the position or pose ($p_{ps}$) of the parking slot (PS) in the reference coordinate system by applying a singular value decomposition (SVD) of the reconstruction matrix (A).

2. Method according to claim 1,
   wherein the parking slot (PS) and/or the four edges (p) of the parking slot (PS) are determined by using a neural network embodied to detect the parking slot (PS) and/or edges (p) of a parking slot (PS) based on image input data.

3. Method according to claim 1 or 2,
   wherein the geometry (g(PS)) of the parking slot (PS) is assumed to be a rectangle or parallelogram.

4. Method according to claim 3,
   wherein the geometry (g(PS)) of the parking slot (PS) in the form of a parallelogram or rectangle is described by equations, especially homogeneous equations, referring to two pairs of parallel lines.

5. Method according to any of the preceding claims,
   wherein a ground plane in which the parking slot (PS) lies is determined.

6. Method according to claim 5,
   wherein the plane is transformed into a horizontal plane.

7. Method according to any of the preceding claims,
   wherein a non-linear refinement is carried out.

8. Use of the position or pose of the parking slot (PS) determined by the method according to any of the preceding claims for a parking function of an advanced driver assistance system, or for a scene interpretation module.

9. Computer program comprising instructions, which, when the program is executed by a computer, cause the computer to carry out the method of any of the claims 1-7.

10. Computer-readable (storage) medium comprising instructions executable by at least one processor to perform the method of any of the claims 1-7 or on which the computer program according to claim 9 is stored.

11. Advanced driver assistance system comprising at least one camera, wherein the advanced driver assistance system is embodied to carry out the method according to any of the claims 1-7.

Fig. 1

PS

Fig. 2a

PS

Fig. 2b

Fig. 2c

Fig. 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HO GI JUNG ET AL: "Scanning Laser Radar-Based Target Position Designation for Parking Aid System", IEEE TRANSACTIONS ON INTELLIGENT TRANSPORTATION SYSTEMS, IEEE, PISCATAWAY, NJ, USA, vol. 9, no. 3, 2 September 2008 (2008-09-02), pages 406-424, XP011347124, ISSN: 1524-9050, DOI: 10.1109/TITS.2008.922980 * abstact; fgures 6 and 18; section III.A; equations 1-3. * | 1-11 | INV. G06V10/77 G06V10/82 G06V20/58 G06V10/44 |
| X | CN 114 565 648 A (INTELLIGENT SCIENCE AND TECH LIMITED COMPANY OF SHANGHAI SHANGHAI SHEN) 31 May 2022 (2022-05-31) * claim 2 and page 22, 2nd paragraph; figure 4; page 28 step S313 * | 1-11 | |
| A | Anonymous: "Fit a line with Singular Value Decomposition", , 8 June 2018 (2018-06-08), XP093205079, Retrieved from the Internet: URL:https://ltetrel.github.io/data-science /2018/06/08/line_svd.html [retrieved on 2024-09-13] * the whole document * | 1,8-11 | TECHNICAL FIELDS SEARCHED (IPC) G06V |

-/--

The present search report has been drawn up for all claims

| Place of search | Date of completion of the search | Examiner |
|---|---|---|
| The Hague | 13 September 2024 | Loza, Artur |

EPO FORM 1503 03.82 (P04C01)

| | Europäisches Patentamt European Patent Office Office européen des brevets | **EUROPEAN SEARCH REPORT** | **Application Number** EP 24 17 1545 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MA YONG ET AL: "Research Review on Parking Space Detection Method", SYMMETRY, [Online] vol. 13, no. 1, 2 February 2021 (2021-02-02), pages 1-18, XP093189759, ISSN: 2073-8994, DOI: 10.3390/sym13010128 Retrieved from the Internet: URL:https://www.mdpi.com/2073-8994/13/1/128> [retrieved on 2024-09-13] * section 4.3 * | 2 | |
| A | Dongarra J.J ET AL: "Improving the Accuracy of Computed Eigenvalues and Eigenvectors", , 2 February 1983 (1983-02-02), XP093205121, Retrieved from the Internet: URL:https://netlib.org/utk/people/JackDongarra/PAPERS/Improving-the-Accuracy-of-Computed-Eigenvalues-and-Eigenvectors.pdf [retrieved on 2024-09-13] * abstract * | 7 | TECHNICAL FIELDS SEARCHED (IPC) |

The present search report has been drawn up for all claims

| Place of search | Date of completion of the search | Examiner |
|---|---|---|
| The Hague | 13 September 2024 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1545

13-09-2024

| Patent document cited in search report | Publication date | Patent family member(s) | Publication date |
|---|---|---|---|
| CN 114565648 A | 31-05-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. PHAM et al.** NVAutoNet: Fast and Accurate 360° 3D Visual Perception For Self Driving. *arXiv:2303.12976*
- **X. ZHOU et al.** Objects as Points. *arXiv: 1904.07850*

- **C. EISING et al.** Computer Vision in Automated Parking Systems: Design, Implementation and Challenges. *on arXiv:2104.12537*